# EUROPEAN PATENT APPLICATION

(11) **EP 1 080 859 A1**
(43) Date of publication of application: **07.03.2001**
(21) Application number: 00306276.7
(22) Date of filing: 24.07.2000
(51) Int. Cl.: B28D 1/04

(54) **Core cutting tool**

(30) Priority: 02.09.1999 GB 9920638
(71) Applicant: Marcrist International Limited, Doncaster DN3 1QR (GB)
(72) Inventor: Halbeisen, Mario Marcrist Holdings Limited, Doncaster DN3 1QR (GB); Brown, Michael John William Marcrist Holdings Li, Doncaster DN3 1QR (GB)
(74) Representative: Loven, Keith James

(57) **Abstract**

A core cutting tool for use on masonry comprises a tubular body (1) having one end (2) closed and carrying connecting means (4) and the other, open, end (3) having a plurality of masonry cutting teeth (5) mounted thereon, the teeth being separated one from another by slots (6) extending along the body from said open end.

## Description

### Field of the Invention

This invention relates to a core cutting tool for cutting masonry and the like.

### Background to the Invention

Conventional core cutting tools consist of a tubular body with a closed end on which is mounted an internally threaded connector for attachment to a power drill or the like. Cutting teeth comprising diamond cutting particles may be mounted around the rim of the body, and one or more apertures may be provided in the side of the body for removal of dust and to permit the core to be ejected from the body after the tool has been withdrawn from the bore. This is usually done by inserting a metal rod or similar object into the aperture to lever the core out. The same aperture and rod can serve to assist in unscrewing the tool from the power drill at the end of its use. A pair of opposed apertures are desirable for these purposes.

While it is known to provide slots between the cutting teeth on masonry cutting discs, to assist in clearing debris away from the teeth in use, thereby increasing cutting efficiency, it has long been thought that providing slots between the teeth on core cutting tools would compromise accuracy of cutting, because considerable forces are generated between the diamond cutting tool and the masonry, in use, and a continuous rim to the tubular tool is essential to maintain the necessary stability.

It has now been found that not only can the teeth on the rim of such a tool be separated by slots without loss of cutting accuracy, but that advantages are gained such as increased cutting speed and a reduction in the loss of teeth, in use.

### Summary of the Invention

According to the invention, therefore, there is provided a core cutting tool for use on masonry, comprising a tubular body having one end closed and carrying connecting means and the other, open, end having a plurality of individual masonry cutting teeth mounted thereon, each pair of adjacent teeth being separated one from another by a respective slot extending through the side wall of the tubular body and along the body from said open end for a distance sufficient for debris to clear in use.

The slots may be parallel to the longitudinal axis of the body or oblique thereto. They may be rounded at the end remote from the open end of the body, square-cut, or of other shape. The slots may have a keyhole configuration, for example as used in conventional diamond masonry cutting discs.

Although conventional core cutting tools may have as few as three relatively long teeth around the rim thereof, and a similar configuration may be adopted in the tool of the present invention, a greater number of shorter teeth, and hence a greater number of slots may be employed in the core cutting tool of the present invention.

The slots serve to clear debris from the teeth more effectively than apertures remote from the teeth, as in the conventional configuration, thus permitting the tool to cut more rapidly. It has been found that the slots allow the dust generated by the teeth in cutting masonry to flow outwardly of the tool, clearing the debris at the point at which it is generated. In addition, the slots may be used in the conventional manner for dislodging cores from within the body after the cutting operation, and to assist in unscrewing the tool from the drill after use.

While the slots may all be of the same length, it is preferred to make one slot longer than the others to assist in debris removal without unduly decreasing the strength of the body. A hole may also be provided in the tubular body for insertion of a rod or bar to assist in unscrewing the tool from the electric drill after use, rather than using any of the slots. The hole is preferably arranged so as to be diametrically opposed to the long slot, and preferably adjacent to the end of one of the other slots.

The tool may, in some embodiments, incorporate a centre guide drill in conventional manner.

### Brief Description of the Drawing

In the drawings, which illustrate an exemplary embodiment of the invention:

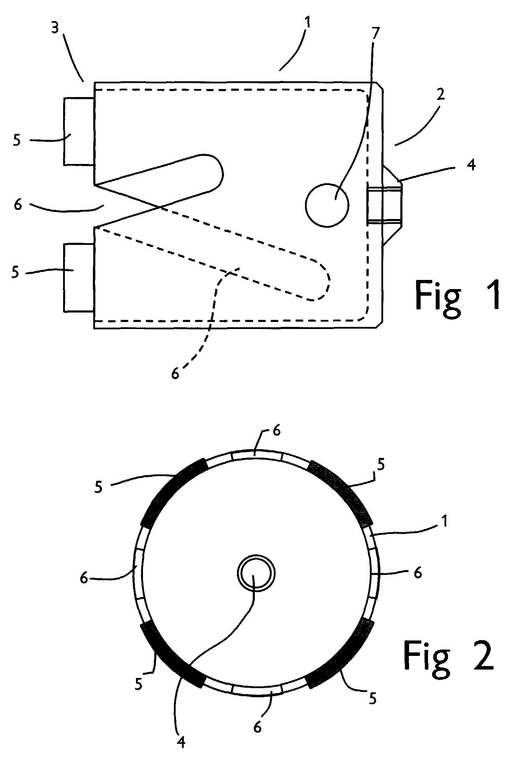

Figure 1 is a side elevation; and
Figure 2 is an end elevation of the core-cutting tool.

### Detailed Description of the Illustrated Embodiment

The core-cutting tool comprises a tubular body 1 having one end 2 thereof closed and the other end 3 open. The closed end 2 carries an internally threaded boss 4 for connection of the tool to an electric drill, this connection being entirely conventional. The open end 3 carries four equally-spaced cutting teeth 5, each consisting of a body of relatively soft metal carrier material, such as bronze or brass, containing diamond particles which serve to cut the masonry with which the tool is intended to be used. Between the teeth 5 the body 1 has four elongate slots 6 extending obliquely to the longitudinal axis of the body, three of the slots being of a first length which is smaller than half the length of the body, and the fourth being of a greater length than the other three, for example approximately twice the length of the other three. While it would be desirable for the purposes of debris removal during cutting to have all slots as long as possible, long slots might tend to decrease the strength of the body. It has been found, however, that by making one of the slots longer, adequate debris clearance can be obtained without compromising the strength of the tool. It will be understood that, while four slots are illustrated in the drawings, more or fewer slots can be used.

While the slots can be used to assist in unscrewing the tool from the electric drill, by inserting a bar or rod through an opposed pair of the slots, an additional hole 7 is provided for this purpose to avoid the risk of distortion of the body through use of the slots.

## Claims

1. A core cutting tool for use on masonry, comprising a tubular body having one end closed and carrying connecting means and the other, open, end having a plurality of individual masonry cutting teeth mounted thereon, each pair of adjacent teeth being separated one from another by a respective slot extending through the side wall of the tubular body and along the body from said open end for a distance sufficient for debris to clear during use.

2. A core cutting tool according to Claim 1, wherein the slots are parallel to the longitudinal axis of the body.

3. A core cutting tool according to Claim 1 or 2, wherein the slots are oblique to the longitudinal axis of the body.

4. A core cutting tool according to Claim 1, 2 or 3, wherein the slots are rounded at the end remote from the open end of the body.

5. A core cutting tool according to Claim 1, 2 or 3, wherein the slots are of generally rectangular shape.

6. A core cutting tool according to Claim 1, 2 or 3, wherein the slots have a keyhole shape.
